# EUROPEAN PATENT APPLICATION

(11) **EP 2 003 825 A1**
(43) Date of publication of application: **17.12.2008**
(21) Application number: 07301101.7
(22) Date of filing: 12.06.2007
(51) Int. Cl.: H04L 12/56

(54) **Method for sending a message to a receiving equipment attached to a network domain and associated to an unknown identifier and corresponding server(s)**

(71) Applicant: Alcatel Lucent, 75008 Paris (FR)
(72) Inventor: Cristallo, Geoffrey, 1080, MOLENBEEK (BE); Van Ackere, Michel, 2018, ANTWERP (BE)
(74) Representative: Chaffraix, Sylvain

(57) **Abstract**

A server (PS1), for a communication network (TN), comprises i) a storing means (SM1) storing first and second routing identifiers, representative of receiving network domains (ND1-ND2) and receiving equipments (RE11-RE22), in correspondence with primary domain identifiers and primary equipment identifiers, respectively associated to these receiving network domains and receiving equipments, and ii) a control means (CM1) arranged, when it receives a message comprising first and second routing identifiers respectively representative of a receiving network domain and a receiving equipment, to determine, into the storing means (SM1), the primary domain identifier and the primary equipment identifiers which correspond to the first and second routing identifiers contained into the message, in order to route this message up to the receiving equipment.

## Description

The present invention relates to communication networks, and more particularly to the transmission of messages from sending equipments to receiving equipments via such networks.

Usually, when a sending equipment wants or needs to send a message (or request) to a receiving equipment attached to a "network domain" (or "realm"), it has to put a communication identifier (for instance the IP address) of this receiving equipment and possibly a communication identifier of this network domain into its message. If the message can be sent to any receiving equipment of a network domain, the sending equipment only needs to put the domain identifier in its message, and an intermediary (or "proxy") server is responsible for determining the communication identifier of one receiving equipment to which the message (or request) from the sending equipment must be sent.

For instance the IETF has proposed to use two Routing Attribute Value Pair (AVP) fields, called Destination-Realm AVP and Destination-Host AVP, to designate the realm identifier and a destination host identifier (which is not necessarily the identifier of the receiver equipment) into a message to be transmitted via an IP network.

In certain circumstances and/or in certain network architectures (such as TISPAN ("Telecom & Internet converged Services & Protocols for Advanced Networks")), a sending equipment may have to send a message (or request) to a particular receiving equipment attached to a network domain, without knowing the communication identifier which is associated to this receiving equipment into this network domain. It may also arrive that the sending equipment knows neither the communication identifier which is associated to the network domain to which a receiving equipment is attached to, nor the communication identifier which is associated to this receiving equipment into this network domain. This may appear when only one point of contact is exposed to the sending equipment and therefore that the communication identifier of the effective receiver equipment is hidden to the sending equipment. In any one of the above mentioned situations, the server is unable to route the message (or request) to the (a) receiving equipment.

So, the object of this invention is to overcome this drawback.

For this purpose, it provides a method for sending a message from a sending equipment (which is connected to a communication network), to a receiving equipment (which is attached to a receiving network domain (associated to a primary domain identifier) and associated to a primary equipment identifier into this receiving network domain), in case where the primary domain identifier and/or the primary equipment identifier is/are unknown from the sending equipment.

This method consists in:
- generating a message comprising known first and second routing identifiers respectively representative of the receiving network domain and the receiving equipment, into the sending equipment,
- transmitting this message towards the receiving equipment,
- determining during this transmission, in at least one table, the primary domain identifier and the primary equipment identifier which correspond to the first and second routing identifiers (that are contained into the message), in order to route this message up to the receiving equipment.

The method according to the invention may include additional characteristics considered separately or combined, and notably :
- the primary domain identifier and the primary equipment identifier may be stored into a single table respectively in correspondence with the first and second routing identifiers;
- in a variant, during the message transmission one may first determine, a table, an auxiliary routing identifier which corresponds to the first routing identifier contained into the message, in order to route the message up to an intermediate server which is associated to this auxiliary routing identifier and which stores an other table establishing a correspondence between primary domain identifiers and primary equipment identifiers and first and second routing identifiers. Then, one may determine into this other table the primary domain identifier and the primary equipment identifier that are stored respectively in correspondence with the first and second routing identifiers, in order to route the message up to the receiving equipment;
- the first and second routing identifiers may be contained into a dedicated Routing Attribute Value Pair (AVP) field of the message to be transmitted;
- in a variant, the first and second routing identifiers may be contained into a modified Routing Attribute Value Pair (AVP) field of the message to be transmitted. For instance, this modified Routing AVP field may be the "Destination-Realm AVP" with a new format.

The invention also provides a first (intermediary or proxy) server for a communication network, comprising:
- a storing means provided for storing first and second routing identifiers (representative of receiving network domains and receiving equipments) in correspondence with primary domain identifiers and primary equipment identifiers (respectively associated to the receiving network domains and receiving equipments), and
- a control means arranged when it receives a message comprising first and second routing identifiers (respectively representative of a receiving network domain and a receiving equipment), to determine, into the storing means, the primary domain identifier and the primary equipment identifiers which correspond to the first and second routing identifiers that are contained into the message, in order to route this message up to the receiving equipment.

The invention also provides a second (intermediary or proxy) server for a communication network, comprising:
- a storing means intended for storing auxiliary routing identifiers (notably associated to other servers) in correspondence with first routing identifiers representative of receiving network domains, and
- a control means arranged when it receives a message comprising first and second routing identifiers respectively representative of a receiving network domain and a receiving equipment, to determine, into the storing means, an auxiliary routing identifier which corresponds to the first routing identifier contained into the message, in order to route this message up to the server which is associated to the auxiliary routing identifier.

Other features and advantages of the invention will become apparent on examining the detailed specifications hereafter and the appended drawings, wherein :
- figure 1 schematically illustrates an example of communication network comprising an example of embodiment of a first proxy server according to the invention, and
- figure 2 schematically illustrates an example of communication network comprising two examples of embodiment of first proxy servers according to the invention and an example of embodiment of a second proxy server according to the invention.

The appended drawings may not only serve to complete the invention, but also to contribute to its definition, if need be.

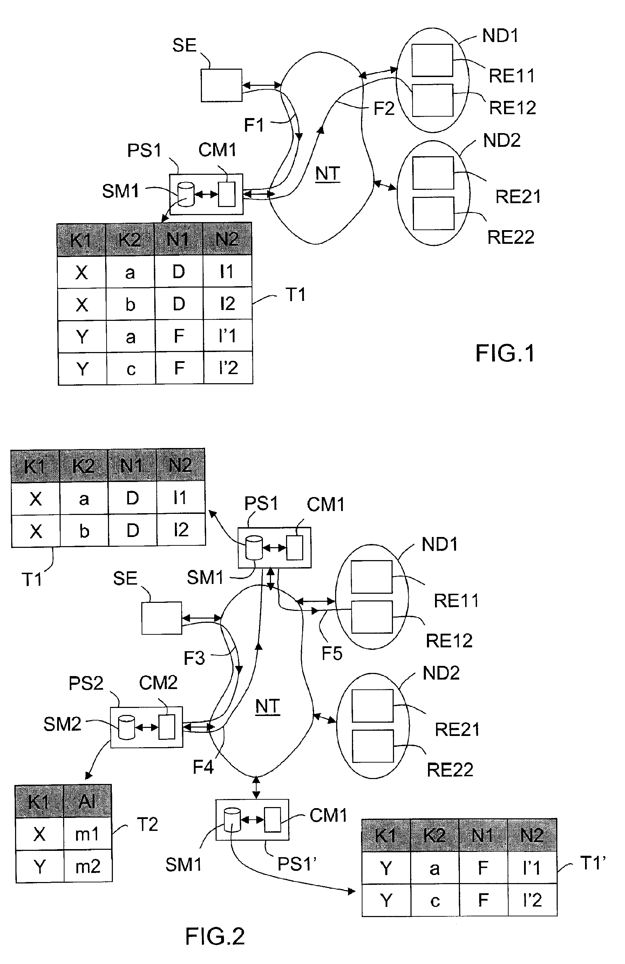

Reference is initially made to figure 1 to describe a communication network TN capable of implementing the invention. In the following description it will be considered that the communication network TN is an IP (Internet Protocol) network.

It is important to notice that the invention concerns any type of communication network allowing communication equipments to exchange data. So, it concerns not only the wired (or broadband) networks, such as xDSL networks, cable networks and fiber networks, but also the wireless (radio and/or satellite) networks, including the cellular or mobile 3GPP networks and WLANs ("Wireless Local Area Networks") of any type.

A communication network TN is typically made of several sub-networks, such as an access network and a core network connected therebetween through edge routers. Communication equipments SE, REij can be connected to the access network through access nodes (not illustrated).

These communication equipments may be of various types, such as mobile phone, fixed handset, fixed or portable (personal) computer, personal digital assistant (PDA), set-top box (STB), or IP phone. Moreover, at least some of the communication equipments REij are attached to a network domain (or realm) NDi.

In the illustrated example, only two network domains ND1 and ND2 (i = 1 or 2) have been sketched. But the invention is not limited to this number of network domains (or realms). Indeed, it applies to any number of network domains greater than one (i = 2 to N, with N ≥2).

Moreover, in the illustrated example, each network domain NDi comprises two communication equipments REij (j = 1 or 2). But each network domain (or realm) NDi may comprise any number of communication equipments REij greater than zero (j = 1 to Z, with Z ≥1).

Each network domain NDi is associated to a first communication identifier (hereafter called "primary domain identifier") N1i, for instance an IP address. Each communication equipment REij is also associated to a first communication identifier (hereafter called "primary equipment identifier") N2j, for instance an IP address, inside its network domain NDi.

Moreover, each network domain NDi is also associated to a second communication identifier (hereafter called "first routing identifier" or first key) K1i, for instance an alphanumeric identifier, and each communication equipment REij is also associated to a second communication identifier (hereafter called "second routing identifier" or second key) K2j, for instance an alphanumeric identifier.

When a sending equipment SE wants or needs to send a message (or request) to a particular receiving equipment REij attached to a network domain NDi, it knows either the primary domain identifier N1i of this network domain NDi and the primary equipment identifier N2j of this receiving equipment REij or the first key K1i representative of this network domain NDi and the second key K2j representative of this receiving equipment REij.

The first K1i and second K2j keys can be seen as identifiers of a fictitious point of contact which is used to hide a receiver equipment REij, for instance in a TISPAN architecture.

The invention intervenes notably when a sending equipment SE wants or needs to send a message (or request) to a particular receiving equipment (for instance RE12) attached to a network domain (for instance ND1), and only knows the first key K11 of this network domain ND1 and the second key K22 of this receiving equipment RE12.

In order to manage this situation, the invention proposes to store in at least one table T1 the primary domain identifiers N1i and the primary equipment identifiers N2j in correspondence with first K1i and second K2j keys representative respectively of the receiving network domains NDi and the receiving equipments REij.

As illustrated in figure 1, such a (first) table T1 can be stored into a (first) storing means SM1 of a (first) intermediary (or proxy) server PS1 which is connected to the communication network TN (either its access network or its core network). This (first) storing means SM1 can be of any type. So, it can be a memory or a database, for instance.

It is important to notice that several first servers PS1 containing a first table T1 can be connected to the communication network TN.

In the non limiting illustrated example, the first table T1 contains:
- a primary domain identifier N11 = D (associated to the first network domain ND1) stored in correspondence with a primary equipment identifier N21 = 11 (associated to a first communication equipment RE11), a first key K11 = X (representative of the first network domain ND1) and a second key K21 = a (representative of the first communication equipment RE11),
- a primary domain identifier N11 = D (associated to the first network domain ND1) stored in correspondence with a primary equipment identifier N22 = 12 (associated to a second communication equipment RE12), a first key K11 = X (representative of the first network domain ND1) and a second key K22 = b (representative of the second communication equipment RE12),
- a primary domain identifier N12 = F (associated to the second network domain ND2) stored in correspondence with a primary equipment identifier N21 = I'1 (associated to a third communication equipment RE21), a first key K12 = Y (representative of the second network domain ND2) and a second key K21 = a (representative of the third communication equipment RE21),
- a primary domain identifier N12 = F (associated to the second network domain ND2) stored in correspondence with a primary equipment identifier N22 = I'2 (associated to a fourth communication equipment RE22), a first key K12 = Y (representative of the second network domain ND2) and a second key K22 = c (representative of the fourth communication equipment RE22).

It is important to notice that some second keys K2j may be identical for communication equipments attached to different network domains. In the same way, some primary equipment identifiers N2j may be identical for communication equipments attached to different network domains.

According to the invention, when the sending equipment SE wants or needs to send a message (or request) to the second receiving equipment RE12 (attached to the first network domain ND1), and only knows the first key K11 (X) of this first network domain ND1 and the second key K22 (b) of this second receiving equipment RE12, it integrates the first K11 (X) and second K22 (b) keys (or routing identifiers) into this message.

For instance, the first K11 (X) and second K22 (b) keys (or routing identifiers) are integrated into a dedicated Routing Attribute Value Pair (AVP) field of the message.

In a variant, the first K11 (X) and second K22 (b) keys (or routing identifiers) may be integrated into a modified Routing Attribute Value Pair (AVP) field of the message to be transmitted. For instance, this modified Routing AVP field may be the one proposed by IETF and called "Destination-Realm AVP", but with a new format.

Once the sending equipment SE has generated its message, it transmits this message towards the receiving equipment R12, via the communication network TN to which it is connected to. This communication network TN routes this message to the first proxy server PS1 (arrow F1 in figure 1). For instance the first proxy server PS1 is a DIAMETER proxy server.

The first proxy server PS1 comprises a control module CM1 which is arranged, when it receives the message, to determine the first K11 (X) and second K22 (b) keys that are contained into its routing field (for instance the modified Destination-Realm AVP). Then, the control module CM1 accesses to its first storing means SM1 in order to determine the primary domain identifier N11 (D) and the primary equipment identifier N22 (12) which are stored into the first table T1 in correspondence with the first K11 and second K22 keys (or routing identifiers) it has just determined into the received message.

Knowing the primary domain identifier N11 (D) and the primary equipment identifier N22 (I2), the control module CM1 of the first proxy server PS1 is now capable of routing the received message up to the receiving equipment R12 (arrow F2 in figure 1).

A variant of the above described sending method will now be described with reference to figure 2. In this variant the communication network TN is identical to the one above described (with reference to figure 1). But at least one intermediary (or proxy) server PS2 is connected to its access network or its core network in addition to at least one first proxy server PS1.

According to the invention, a second proxy server PS2 comprises a second storing means SM2 storing a second table T2 establishing a correspondence between auxiliary routing identifiers Alk and first keys (or routing identifiers) K1i representative of network domains NDi. This second storing means SM2 can be of any type. So, it can be a memory or a database, for instance.

The auxiliary routing identifiers Alk are notably associated to first proxy servers PS1 which are each in charge of a first table T1 dedicated to one or more network domains NDi. But, some of them could be also associated to different receiving equipments REij. In this last case, the auxiliary routing identifier Alk is identical to the primary equipment identifier N2j of the receiving equipments REij to which it is associated to.

It is important to notice that several second proxy servers PS2 containing a second table T2 can be connected to the communication network TN.

In the non limiting illustrated example, the second table T2 contains:
- an auxiliary routing identifier AI1 = m1 (associated to a first proxy servers PS1 which is only dedicated to the first network domain ND1) stored in correspondence with a first key K11 = X (representative of the first network domain ND1), and
- an auxiliary routing identifier AI2 = m2 (associated to a second proxy servers PS1' which is only dedicated to the second network domain ND2) stored in correspondence with a first key K12 = Y (representative of the second network domain ND2).

So, in this non limiting example the second proxy servers PS2 is intended for routing messages to a first proxy server PS1 dedicated to routing of messages into the first network domain ND1 and to another first proxy server PS1' dedicated to routing of messages into the second network domain ND2. That is the reason why the first table T1 of the first proxy server PS1 only contains identifiers referring to the first network domain ND1 and its attached receiving equipments RE1j, while the first table T1' of the first proxy server PS1' only contains identifiers referring to the second network domain ND2 and its attached receiving equipments RE2j.

But, in a variant the second proxy servers PS2 could be intended for routing messages to a first proxy server PS1 dedicated to routing of messages into the first ND1 and second ND2 network domains and possibly to another first proxy server PS1" (not illustrated) dedicated to routing of messages into a third network domain ND3 (not illustrated) and/or to receiving equipments attached to (an)other network domain(s). In this case, the first proxy server PS1 would store a first table T1 identical to the one illustrated in figure 1.

According to the invention, when the sending equipment SE wants or needs to send a message (or request) to the second receiving equipment RE12 (attached to the first network domain ND1), and only knows the first key K11 (X) of this first network domain ND1 and the second key K22 (b) of this second receiving equipment RE12, it integrates the first K11 (X) and second K22 (b) keys (or routing identifiers) into this message.

For instance, the first K11 (X) and second K22 (b) keys (or routing identifiers) are integrated into a dedicated Routing Attribute Value Pair (AVP) field of the message or into a modified Routing Attribute Value Pair (AVP) field of the message to be transmitted (for instance, this modified Routing AVP field may be Destination-Realm AVP with a new format).

Once the sending equipment SE has generated its message, it transmits this message towards the receiving equipment R12, via the communication network TN to which it is connected to. This communication network TN routes this message to the second proxy server PS2 (arrow F3 in figure 2). For instance the second proxy server PS2 is a DIAMETER proxy server.

The second proxy server PS2 comprises a control module CM2 which is arranged, when it receives the message, to determine the first key K11 (X) contained into its routing field (for instance the modified Destination-Realm AVP) while ignoring the second key K22 (b). Then, the control module CM2 accesses to the second storing means SM2 in order to determine the auxiliary routing identifier AI1 = m1 which is stored into the second table T2 in correspondence with the first key (or routing identifier) K11 it has just determined into the received message.

Knowing the auxiliary routing identifier AI1 = m1, the control module CM2 of the second proxy server PS2 is now capable of routing the received message up to the first proxy server PS1 which is designated by m1 (arrow F4 in figure 1).

When the first proxy server PS1 receives the message, its control module CM1 determines the first K11 (X) and second K22 (b) keys that are contained into its routing field (for instance the modified Destination-Realm AVP). Then, the control module CM1 accesses to the first storing means SM1 in order to determine the primary domain identifier N11 (D) and the primary equipment identifier N22 (12) which are stored into the first table T1 in correspondence with the first K11 and second K22 keys (or routing identifiers) it has just determined into the received message.

Knowing the primary domain identifier N11 (D) and the primary equipment identifier N22 (I2), the control module CM1 of the first proxy server PS1 is now capable of routing the received message up to the receiving equipment R12 (arrow F5 in figure 2).

The control modules CM1 and CM2 and the storing means SM1 and SM2 can be software modules. But they may be also respectively made of electronic circuit(s) or hardware modules, or a combination of hardware and software modules.

One will notice that in a TISPAN architecture a receiving equipment REij includes an RACF function ("Resource and Admission Control Function") which is responsible for granting/denying requests for resources coming from a sending equipment including an application function (AF). So, the RACF function identifies the Line which corresponds to the connection between its receiving equipment and the sending equipment, determines the remaining amount of bandwidth on this Line, compares with the requested bandwidth, and returns the appropriate answer (grant or deny).

It is important to notice that the implementation of the invention is compatible with the two situations (or scenario) defined by IETF and mentioned in the introductory part. Indeed, if any receiving equipment attached to a network domain may be addressed by a message, the primary domain identifier is included in the message as a unique first routing identifier or Key, and if a particular receiving equipment attached to a network domain must be addressed, and if the primary communication identifier of this receiving equipment is known by the sending equipment, the primary domain identifier and the primary equipment identifier are included in the message as the first and second routing identifiers or Keys.

The invention is not limited to the embodiments of communication network, first (proxy) server, second (proxy) server and sending method described above, only as examples, but it encompasses all alternative embodiments which may be considered by one skilled in the art within the scope of the claims hereafter.

## Claims

1. Method for sending a message from a sending equipment (SE), connected to a communication network (TN), to a receiving equipment (REij), attached to a receiving network domain (NDi) associated to a primary domain identifier, and associated to a primary equipment identifier into said receiving network domain (NDi), said primary domain identifier and/or said primary equipment identifier being unknown from said sending equipment (SE), **characterized in that** it consists in:
- generating a message comprising known first and second routing identifiers respectively representative of said receiving network domain (NDi) and said receiving equipment (REij), into said sending equipment (SE),
- transmitting this message towards said receiving equipment (REij),
- determining during said transmission, in at least one table, said primary domain identifier and said primary equipment identifier which correspond to said first and second routing identifiers contained into said message, in order to route said message up to said receiving equipment (REij).

2. Method according to claim 1, wherein said primary domain identifier and said primary equipment identifier are stored into a single table respectively in correspondence with said first and second routing identifiers.

3. Method according to claim 1, wherein i) one determines during said transmission, in a table, an auxiliary routing identifier which corresponds to said first routing identifier contained into said message, in order to route said message up to an intermediate server (PS1) associated to said auxiliary routing identifier and storing an other table establishing a correspondence between primary domain identifiers and primary equipment identifiers and first and second routing identifiers, then ii) one determines into said other table said primary domain identifier and said primary equipment identifier that are stored respectively in correspondence with said first and second routing identifiers, in order to route said message up to said receiving equipment (REij).

4. Method according to one of claims 1 to 3, wherein said first and second routing identifiers are contained into a dedicated Routing Attribute Value Pair (AVP) field of said message to be transmitted.

5. Method according to one of claims 1 to 3, wherein said first and second routing identifiers are contained into a modified Routing Attribute Value Pair (AVP) field of said message to be transmitted.

6. Method according to claim 5, wherein said modified Routing AVP field is "Destination-Realm AVP" with a new format.

7. Server (PS1) for a communication network (TN), **characterized in that** it comprises i) a storing means (SM1) storing first and second routing identifiers, representative of receiving network domains (NDi) and receiving equipments (REij), in correspondence with primary domain identifiers and primary equipment identifiers, respectively associated to said receiving network domains (NDi) and receiving equipments (REij), and ii) a control means (CM1) arranged, when it receives a message comprising first and second routing identifiers respectively representative of a receiving network domain (NDi) and a receiving equipment (REij), to determine, into said storing means (SM1), said primary domain identifier and said primary equipment identifiers which correspond to said first and second routing identifiers contained into said message, in order to route said message up to said receiving equipment (REij).

8. Server (PS2) for a communication network (TN), **characterized in that** it comprises i) a storing means (SM2) storing auxiliary routing identifiers, notably associated to other servers (PS1), in correspondence with first routing identifiers representative of receiving network domains (NDi), and ii) a control means (CM2) arranged when it receives a message comprising first and second routing identifiers respectively representative of a receiving network domain (NDi) and a receiving equipment (REij), to determine, into said storing means (SM2), an auxiliary routing identifier which corresponds to said first routing identifier contained into said message, in order to route said message up to the server (PS1) which is associated to said auxiliary routing identifier.
